# FASCICULE DE BREVET EUROPEEN

(11) **EP 0 363 245 B1**
(45) Date de publication et mention de la délivrance du brevet: **07.01.1993**
(21) Numéro de dépôt: 89402590.7
(22) Date de dépôt: 21.09.1989
(51) Int. Cl.: G01B 13/18

(54) **Dispositif de réglage de la position angulaire d'un organe entraînant un arbre de commande rotatif**
Einrichtung zum Kontrollieren der Winkelstellung eines eine drehbare Antriebswelle antreibenden Stellorgans
Device for the control of the angular position of a member entraining a rotating drive shaft

(30) Priorité: 03.10.1988 FR 8812905
(43) Date de publication de la demande: 11.04.1990
(73) Titulaire: LUREM S.A., F-61700 Domfront (FR)
(72) Inventeur: Chesse,Jean, F-61700 Domfront (FR)
(74) Mandataire: Polus, Camille

(56) Documents cités:
- DE-A- 3 312 376
- GB-A- 2 001 174

## Description

La présente invention concerne un dispositif de réglage de la position angulaire d'un organe.

On utilise de tels organes notamment sur une machine-outil pour faire varier la position relative d'un outil par rapport à une pièce à usiner.

Jusqu'à présent, on utilise couramment un volant éventuellement muni d'une poignée d'actionnement, monté sur un arbre de commande auquel il est lié en rotation. La position dite de première passe de l'outil est déterminée, par exemple, a l'aide d'un index qui se déplace devant une réglette graduée fixe, conjointement au déplacement de l'outil commandé par la rotation de l'organe de commande.

Il s'avère qu'après avoir ralisé la première passe, il est souvent nécessaire d'ajuster la position de l'outil à l'aide d'un déplacement de celui-ci précis et relativement faible qui ne peut être déterminé de manière sûre par le dispositif comportant un index et une réglette.

Pour réaliser ce déplacement précis par l'intermédiaire d'une rotation de faible amplitude de l'arbre de commande, un dispositif de "réglage fin" est prévu sur la machine.

On connaît de tels dispositifs dont l'un comporte une bague graduée montée concentrique sur l'arbre de commande par rapport auquel elle peut être déplacée en rotation et avec lequel elle peut être entraînée en rotation. Les graduations, lors d'une rotation de la bague, se déplacent devant un index fixe solidaire du bâti de la machine.

Pour effectuer le réglage fin, par exemple à partir de la position de première passe, on amène par rotation de la bague autour de l'arbre de commande un repère des graduations (par exemple la graduation O) devant l'index. Puis, à l'aide d'une table de conversion, on détermine le nombre de graduations dont il faudra faire tourner l'arbre de commande. Ensuite, on fait tourner la bague autour de l'arbre de commande jusqu'à mettre en vis-à-vis de l'index et la graduation précédemment déterminée. La dernière étape consiste à faire tourner conjointement l'arbre de commande et la bague pour ramener le repère (O) en vis-à-vis de l'index. Ceci provoque le déplacement désiré de l'outil.

Un tel dispositif est coûteux, car il nécessite non seulement une bague graduée pour tourner avec l'arbre de commande ou indépendamment par rapport à celui-ci, mais également de réaliser un index fixe en un point écarté du bâti. L'index nécessite donc un support pouvant être accidentellement déformé ou cassé.

Dans un autre dispositif de réglage fin, on utilise un ensemble à balourd. Dans ce dispositif, la face avant du volant est pourvue d'un logement cylindrique coaxial a l'arbre de commande recevant une bague graduée pouvant tourner librement dans son logement ou entraînée en rotation par l'arbre de commande. Le logement comporte également un arbre horizontal coaxial à l'arbre de commande sur lequel est monté libre en rotation un pendule composé d'un balourd situé sous l'arbre horizontal prolongé et, dans la partie située au-dessus de l'arbre horizontal, par un élément en forme de flèche. La flèche constitue ainsi un index ayant une orientation verticale constante et qui est situé en vis-à-vis des graduations de la bague.

Le fonctionnement de ce dispositif à balourd est semblable à celui du dispositif précédemment décrit.

Le dispositif à balourd nécessite une mécanique coûteuse. De plus, il existe un léger frottement du pendule sur l'axe horizontal, ce qui n'assure pas la verticalité rigoureuse de la flèche. Ces frottements peuvent évoluer dans le temps. De plus, un tel dispositif ne peut être utilisé que dans le cas où l'arbre de commande est horizontal, puisque l'arbre de rotation du pendule doit être horizontal et coaxial à l'arbre de commande.

Le brevet DE-A-3.312.376 décrit un dispositif comportant une règle sur une face de laquelle est fixée une chambre cylindrique d'axe perpendiculaire à ladite face.

La face d'extrémité apparente de la chambre comporte une fenêtre annulaire transparente ayant un bord gradué.

La chambre est à demi-remplie d'un liquide dont la surface libre horizontale constitue un repère de référence situé en regard des graduations.

Un tel dispositif ne permet pas de régler la position angulaire d'un axe.

Pour remédier aux inconvénients des dispositifs selon l'art antérieur, la présente invention a pour but de fournir un dispositif de réglage simple, peu coûteux, fiable et précis, de la position angulaire d'un volant destiné à entraîner en rotation un arbre de commande.

A cet effet, l'invention a pour objet un dispositif de réglage de la position angulaire d'un organe de commande entraîné autour de son axe par un organe d'entraînement, du type comportant des graduations réparties selon un cercle coaxial en regard d'un repère de référence d'orientation constante, caractérisé en ce qu'il comporte un corps de réglage monté mobile en rotation autour dudit axe par rapport à l'organe d'entraînement, sur lequel sont agencées lesdites graduations, qui comporte une chambre de révolution coaxiale à demi-remplie d'un liquide dont la surface libre horizontale constitue ledit repère de référence et une fenêtre annulaire transparente située en vis-à-vis des graduations destinée à laisser apparaître la surface libre du liquide en regard des graduations, et en ce qu'il comporte des moyens d'entraînement en rotation du corps pde réglage par l'organe d'entraînement.

Selon d'autres caractéristiques :
- la chambre est cylindrique,
- les moyens d'entraînement en rotation sont des moyens d'entraînement par friction,
- les moyens d'entraînement en rotation sont constitués par au moins une paroi du corps de réglage en contact avec friction avec au moins une paroi de l'organe d'entrainement,
- la paroi du corps de réglage est une jupe cylindrique du corps de réglage faisant saillie vers l'arrière à partir de la chambre de révolution et qui est reçue dans un logement cylindrique annulaire de l'organe d'entraînement ayant au moins une paroi constituant la paroi de l'organe d'entraînement en contact avec friction avec une face latérale de la paroi de la jupe,
- chaque face latérale de la jupe est en contact avec friction avec une paroi du logement cylindrique correspondante,
- la jupe comporte en outre, sur l'une de ses faces latérales, une gorge radiale circulaire coopérant avec des moyens de guidage en rotation et de retenue axiale du corps de réglage qui sont prévus sur l'organe d'entraînement,
- les moyens de guidage en rotation et de retenue axiale comportent au moins une languette élastique solidaire de l'organe d'entraînement s'étendant axialement dans une découpe de la paroi du logement en contact avec ladite face latérale pourvue de la gorge, la languette comportant une nervure circulaire radiale de forme complémentaire de la gorge et destinée à être reçue dans cette dernière,
- les moyens de guidage en rotation et de retenue axiale comportent plusieurs languettes réparties angulairement sur la paroi du logement,
- la fenêtre transparente annulaire est constituée par une face plane d'extrémité avant transparente du corps de réglage sur laquelle sont formées les graduations.

L'invention sera mieux comprise à la lecture de la description détaillée qui va suivre en référence aux dessins annexés sur lesquels :
- la Fig.1 est une vue en élévation d'un dispositif selon l'invention monté sur un volant d'entraînement d'un arbre de commande de machine-outil,
- la Fig.2 est une coupe selon la ligne 2-2 de la Fig.1,
- la Fig.3 est une vue partielle en perspective des moyens de guidage en rotation et de retenue axiale de l'organe de réglage reçu dans un logement de l'organe d'entraînement,
- les figures 4, 5 et 6 sont des vues analogues à la Fig.1 représentant différentes positions relatives de l'organe de réglage selon l'invention et de l'organe d'entraînement.

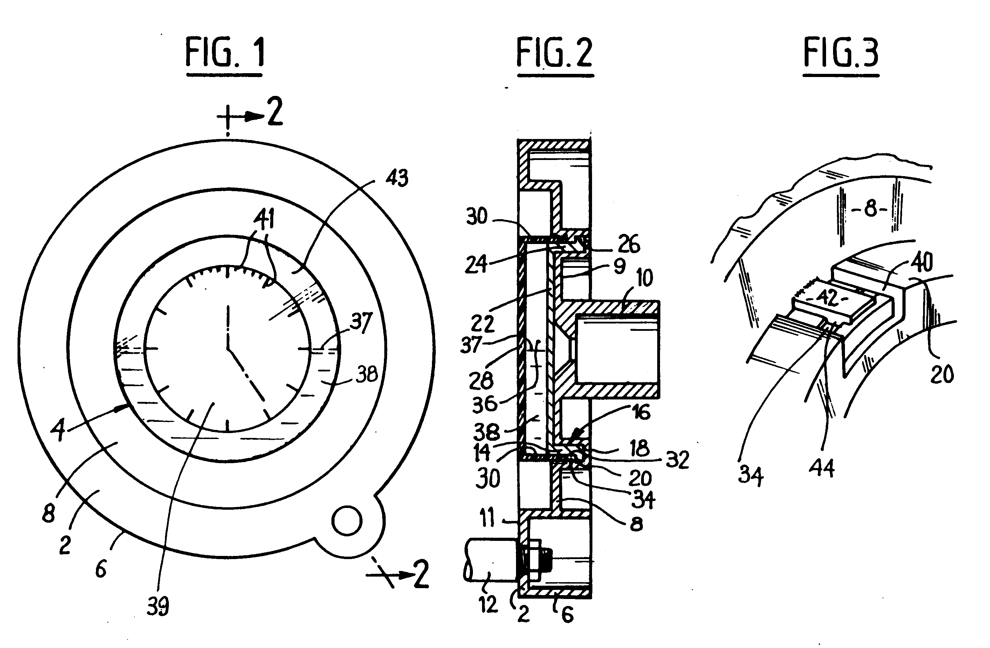

Sur les figures 1 et 2, on a représenté un volant 2 sur lequel est monté un dispositif de réglage 4 selon l'invention.

Le volant 2 comporte une jupe cylindrique annulaire 6, un voile radial 8 venu de matière avec la jupe 6 et situé dans le plan médian de celle-ci.

Un arbre creux 10 coaxial au volant 2 (voir Fig.2) s'étend à partir du voile 8 depuis la face arrière 9 de celui-ci. Cet arbre creux 10 est destiné à être fixé sur un arbre (non représenté) de commande rotatif d'un dispositif de positionnement d'une machine-outil.

Le volant 2 comporte sur la périphérie de sa face avant une poignée 12 destinée à faciliter l'entraînement en rotation de l'arbre de commande.

Le voile 8 comporte sur sa face avant un logement cylindrique annulaire 14 coaxial au volant et s'étendant axialement vers l'arrière. Le diamètre moyen du logement est supérieur à celui de l'arbre creux. Le logement 14 est délimité par une paroi cylindrique axiale interne 16, une paroi radiale de fond 18 et une paroi cylindrique axiale externe 20.

Le dispositif ou organe de réglage 4 est constitué d'un élément formant fond circulaire coopérant avec un élément formant couvercle fixé hermétiquement sur l'élément formant fond.

Le fond comporte une paroi circulaire plane 22 à la périphérie de laquelle s'étend axialement vers l'arrière un manchon 24 venu de matière et comportant un rebord radial 26 à son extrémité éloignée de la face de la paroi plane 22.

Le couvercle comporte une paroi circulaire plane 28 transparente à la périphérie de laquelle s'étend axialement vers l'arrière une jupe 30. L'épaisseur de la jupe 30 est égale à la distance sur laquelle s'étend le rebord radial 26 à partir de la face extérieure 32 du manchon 24.

La jupe 30 est fixée de manière étanche sur la face extérieure 32 du manchon de manière telle que son extrémité libre est espacée du rebord radial 26 pour délimiter une rainure ou gorge 34 et telle que les parois planes circulaires 22 et 28 sont espacées et parallèles.

On a ainsi délimité une chambre interne cylindrique 36 comprise entre la jupe 30 et les parois 22 et 28. La chambre 36 est remplie d'une quantité de liquide 38, de préférence coloré, puis est bouchée hermétiquement. La quantité de produit coloré 38 introduite dans la chambre 36 est égale à la moitié du volume de la chambre de telle sorte que la trace de la surface horizontale 37 du liquide sur la paroi circulaire transparente 28 est un diamètre de cette dernière.

Un disque 39 est collé concentriquement sur la paroi 28 et comporte des graduations 41 réparties à sa périphérie. Le disque 39 possède un diamètre inférieur à la paroi 28, laissant ainsi apparaître dans une zone annulaire 43 le liquide 38 contenu dans le volume 36 ainsi que la surface horizontale supérieure 37 de celui-ci.

L'extrémité du manchon 24 comportant le rebord 26 et les parties adjacentes du manchon 24 et de la jupe 30 sont reçues avec friction dans le logement 14 du volant 2. Ainsi, l'organe de réglage 4 peut tourner par rapport au corps du volant 2 en exerçant un effort supérieur à la friction sur la partie de jupe 30 s'étendant à l'extérieur du logement 14. Par contre, en faisant tourner le volant 2 autour de son axe à l'aide de la poignée 12, le dispositif de réglage 4 est entraîné en rotation avec le volant du fait des forces de friction.

En se reportant maintenant à la Fig.3, on constate que la paroi externe 20 du logement 14 comporte une découpe 40. A l'emplacement de la découpe 40, une languette élastique 42 est solidaire du voile 8 et s'étend axialement vers l'arrière à partir de celui-ci.

La languette 42 comporte sur sa face dirigée vers l'intérieur du logement 14 une nervure 44 destinée à être reçue dans la rainure 34 du dispositif de réglage 4 et ayant une forme complémentaire du profil de cette dernière. La nervure 44 coopérant avec la rainure 34 retient axialement le dispositif de réglage 4 et guide ce dernier lors de sa mise en rotation par rapport au volant 2.

On peut prévoir plusieurs languettes et nervures semblables réparties angulairement sur la paroi 20 du logement 14 et reçues dans la rainure 34. Pour régler le positionnement d'un outil par rapport à une pièce, ou inversement, on utilise un ensemble à réglette et index comme décrit au titre de l'art antérieur, ou un compte-tours lié au volant d'entraînement 2, afin d'amener l'outil dans sa position dite de première passe.

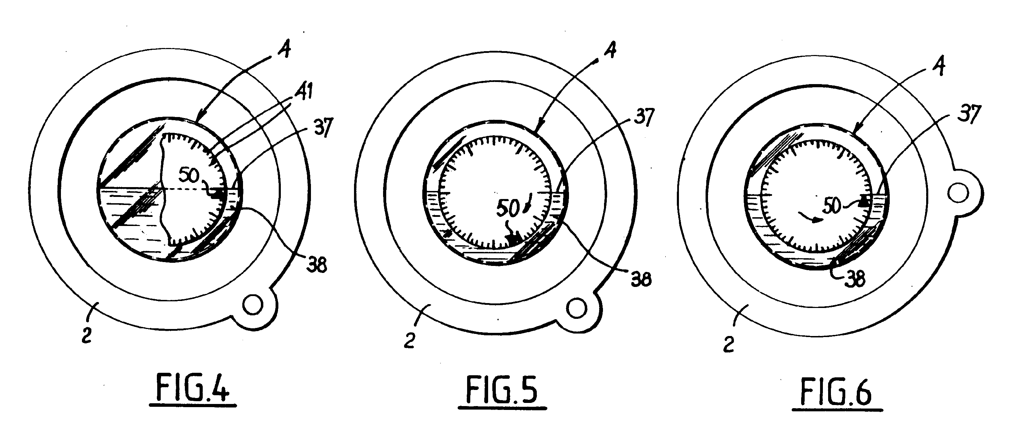

Pour effectuer un réglage fin à partir d'une position donnée relative de l'outil et de la pièce, on pratique de la façon suivante (voir Fig.4, 5 et 6).

Dans un premier temps, l'opérateur par déplacement en rotation de l'organe de réglage selon l'invention 4 par rapport au volant 2, amène un repère 50 des graduations 41 en vis-à-vis de la surface libre 37 du liquide 38, comme représenté sur la Fig.4.

L'opérateur détermine alors le nombre de graduations dont il faudra faire tourner le volant pour amener l'outil dans la position voulue par rapport à la pièce. Dans l'exemple représenté, il s'agit de faire tourner le volant 2 dans le sens inverse des aiguilles d'une montre de dix graduations.

A cet effet, l'opérateur fait tourner le dispositif 4 par rapport au volant 2. La rotation est effectuée dans le sens des aiguilles d'une montre de manière à ce que la dixième graduation à partir du repère 50 se trouve en vis-à-vis de la surface libre 37 du liquide 38. On se trouve alors dans la position représentée à la Fig.5.

L'opérateur fait alors tourner le volant 2 dans le sens inverse des aiguilles d'une montre jusqu'à ce que le repère 50 soit à nouveau en vis-à-vis de la surface libre horizontale du liquide 38, le dispositif 4 étant entraîné en rotation avec le volant 2 par les forces de friction comme précédemment décrit. On se trouve alors dans la position représentée à la Fig.6, qui correspond au positionnement précis de l'outil par rapport à la pièce, ou inversement.

## Revendications

1. Dispositif de réglage de la position angulaire d'un organe de commande entraîné autour de son axe par un organe d'entraînement (2), du type comportant un corps de réglage (4) monté mobile en rotation autour dudit axe par rapport à l'organe d'entraînement (2), des graduations réparties selon un cercle coaxial à l'organe de commande et en regard d'un repère de référence, et des moyens d'accouplement débrayables du corps de réglage et de l'organe d'entraînement, caractérisé en ce que le corps de réglage (4) comporte une chambre de révolution coaxiale à l'organe de commande, munie d'une fenêtre annulaire coaxiale transparente, et à demi-remplie d'un liquide dont la surface libre horizontale constitue ledit repère de référence, les graduations étant réparties sur l'un des bords de la fenêtre annulaire, et en ce que les moyens d'accouplement débrayables sont constitués par au moins une paroi du corps de réglage (4) en contact avec friction avec au moins une paroi (16, 20) de l'organe d'entraînement (2).

2. Dispositif selon la revendication 1, caractérisé en ce que la chambre (36) est cylindrique.

3. Dispositif selon la revendication 1 ou 2, caractérisé en ce que la paroi du corps de réglage est une jupe cylindrique (30, 24, 26) du corps de réglage faisant saillie vers l'arrière à partir de la chambre de révolution (36) et qui est reçue dans un logement cylindrique annulaire (14) de l'organe d'entraînement (2) ayant au moins une paroi constituant la paroi de l'organe d'entraînement en contact avec friction avec une face latérale de la paroi de la jupe.

4. Dispositif selon la revendication 3, caractérisé en ce que chaque face latérale de la jupe est en contact avec friction avec une paroi du logement cylindrique correspondante.

5. Dispositif selon la revendication 3 ou 4, caractérisé en ce que la jupe comporte en outre, sur l'une de ses faces latérales, une gorge radiale circulaire (34) coopérant avec des moyens de guidage en rotation et de retenue axiale (42, 44) du corps de réglage (4) qui sont prévus sur l'organe d'entraînement (2).

6. Dispositif selon la revendication 5, caractérisé en ce que les moyens de guidage en rotation et de retenue axiale (42, 44) comportent au moins une languette élastique (42) solidaire de l'organe d'entraînement (2) s'étendant axialement dans une découpe (40) de la paroi du logement (14) en contact avec ladite face latérale pourvue de la gorge, la languette (42) comportant une nervure circulaire radiale (44) de forme complémentaire de la gorge (34) et destinée à être reçue dans cette dernière.

7. Dispositif selon la revendication 6, caractérisé en ce que les moyens de guidage en rotation et de retenue axiale comportent plusieurs languettes réparties angulairement sur la paroi du logement.

8. Dispositif selon la revendication 1 ou 2, caractérisé en ce que la fenêtre transparente annulaire (43) est constituée par une face plane d'extrémité avant transparente (28) du corps de réglage (4) sur laquelle sont formées les graduations (41).

## Patentansprüche

1. Einrichtung zum Kontrollieren der Winkelstellung eines Stellorgans, das durch ein Antriebsorgan (2) um seine Achse gedreht wird, mit einem Kontrollteil (4), das in bezug auf das Antriebsorgan (2) um die genannte Achse drehbar ist, Teilungen, die auf einem zu dem Stellorgan koaxialen Kreis verteilt sind und einer Bezugsmarke gegenüberliegen, und mit auskuppelbaren Kupplungsmitteln zwischen dem Kontrollteil und dem Antriebsorgan, dadurch **gekennzeichnet**, daß das Kontrollteil (4) eine zu dem Stellorgan koaxiale umlaufende Kammer aufweist, die mit einem ringförmigen, koaxialen transparenten Fenster versehen und zur Hälfte mit einer Flüssigkeit gefüllt ist, deren freie waagerechte Oberfläche die genannte Bezugsmarke bildet, wobei die Teilungen auf einem der Ränder des ringförmigen Fensters verteilt sind, und daß die auskuppelbaren Kupplungsmittel gebildet werden durch wenigstens eine Wand des Kontrollteils (4), die mit wenigstens einer Wand (16,20) des Antriebsorgans (2) in Reibberührung steht.

2. Einrichtung nach Anspruch 1, dadurch **gekennzeichnet**, daß die Kammer (36) zylindrisch ist.

3. Einrichtung nach Anspruch 1 oder 2, dadurch **gekennzeichnet**, daß die Wand des Kontrollteils eine zylindrische Schürze (30,24,26) des Kontrollteils ist, die nach hinten von der umlaufenden Kammer (36) aus vorspringt und in einer ringförmigen zylindrischen Aufnahme (14) des Antriebsorgans (2) aufgenommen wird, das wenigstens eine Wand aufweist, die die mit einer Seitenfläche der Wand der Schürze in Reibberührung stehende Wand des Antriebsorgans bildet.

4. Einrichtung nach Anspruch 3, dadurch **gekennzeichnet**, daß jede seitliche Fläche der Schürze mit einer Wand der zugehörigen zylindrischen Aufnahme in Reibberührung steht.

5. Einrichtung nach Anspruch 3 oder 4, dadurch **gekennzeichnet,** daß die Schürze außerdem auf einer ihrer seitlichen Flächen eine radiale kreisförmige Nut (34) aufweist, die mit an dem Antriebsorgan (2) vorgesehenen Mitteln (42,44) zur drehbaren Führung und zum axialen Halten des Kontrollteils (4) zusammenwirkt.

6. Errichtung nach Anspruch 5, dadurch **gekennzeichnet**, daß die Mittel (42,44) zur drehbaren Führung und zum axialen Halten wenigstens eine an dem Antriebsorgan (2) ausgebildete elastische Zunge (42) aufweisen, die sich axial in einer Ausnehmung (40) der Wand der Aufnahme (14) erstreckt, die mit der genannten, mit der Nut versehenen Seitenfläche in Berührung steht, und daß die Zunge (42) eine radiale kreisförmige Rippe (44) mit einer zu der Nut (34) komplementären Form aufweist, die für die Aufnahme in dieser Nut vorgesehen ist.

7. Einrichtung nach Anspruch 6, dadurch **gekennzeichnet**, daß die Mittel zur drehbaren Führung und zum axialen Halten mehrere Zungen umfassen, die in Winkelabständen auf der Wand der Aufnahme verteilt sind.

8. Einrichtung nach Anspruch 1 oder 2, dadurch **gekennzeichnet**, daß das ringförmige transparente Fenster (43) durch eine transparente ebene vordere Stirnfläche (28) des Kontrollteils (4) gebildet wird, auf der die Teilungen (41) ausgebildet sind.

## Claims

1. Device for the control of the angular position of a drive member driven about its axis by a guiding member (2), of the type including: a control body (4) mounted so as to rotate about the said axis in relation to the driving member (2); graduations distributed along a circle coaxial with the drive member and facing a reference mark; and coupling means which can be disengaged from the control body and from the driving member; characterised in that the control body (4) includes a chamber of revolution coaxial with the drive member, fitted with a transparent coaxial annular window and half-filled with a liquid whose horizontal free surface constitutes the said reference mark, the graduations being distributed on one of the edges of the annular window; and in that the disengagable coupling means are constituted by at least one wall of the control body (4) in frictional contact with at least one wall (16, 20) of the driving member (2).

2. Device according to Claim 1, characterised in that the chamber (36) is cylindrical.

3. Device according to Claim 1 or 2, characterised in that the wall of the control body is a cylindrical skirt (30, 24, 26) of the control body, which skirt projects rearwards from the chamber of revolution (36) and is received in an annular cylindrical housing (14) of the driving member (2) having at least one wall constituting the wall of the driving member in frictional contact with a lateral face of the wall of the skirt.

4. Device according to Claim 3, characterised in that each lateral face of the skirt is in frictional contact with one wall of the corresponding cylindrical housing.

5. Device according to Claim 3 or 4, characterised in that the skirt furthermore includes, on one of its lateral faces, a circular radial groove (34) interacting with means (42, 44) for rotationally guiding and axially retaining the control body (4) which are provided on the driving member (2).

6. Device according to Claim 5, characterised in that the rotational guide and axial retention means (42, 44) include at least one elastic tab (42) solidly attached to the driving member (2) extending axially in a slot (40) of the wall of the housing (14) in contact with the said lateral face provided with the groove, the tab (42) including a radial circular rib (44) of shape complementary with the groove (34) and intended to be received in the latter.

7. Device according to Claim 6, characterised in that the rotational guide and axial retention means include several tabs distributed angularly on the wall of the housing.

8. Device according to Claim 1 or 2, characterised in that the annular transparent window (43) is constituted by a transparent front-end plane face (28) of the control body (4), on which face the graduations (41) are formed.
